Europäisches Patentamt

**European Patent Office**

Office européen des brevets

(19)

(11) Numéro de publication : **0 029 991**
**B1**

(12) **FASCICULE DE BREVET EUROPÉEN**

(45) Date de publication du fascicule du brevet :
05.10.83

(21) Numéro de dépôt : **80107336.2**

(22) Date de dépôt : **25.11.80**

(51) Int. Cl.³ : **F 24 C    7/08**, H 05 B    1/02,
H 05 B    3/68

(54) **Appareil électrique de cuisson.**

(30) Priorité : **28.11.79 FR 7929252**

(43) Date de publication de la demande :
**10.06.81 Bulletin 81/23**

(45) Mention de la délivrance du brevet :
**05.10.83 Bulletin 83/40**

(84) Etats contractants désignés :
**AT BE CH DE IT LI NL SE**

(56) Documents cités :
**DE A 2 309 741**
**DE A 2 605 533**
**DE A 2 717 888**
**DE A 2 733 362**
**US A 2 749 426**
**US A 2 767 299**

(73) Titulaire : **MOULINEX S.A.**
**7 à 15, rue Jules-Ferry**
**F-93170 Bagnolet (FR)**

(72) Inventeur : **Weiss, Roger**
**28 Montpichet Bouleurs**
**F-77580-Crecy-la-Chapelle (FR)**

(74) Mandataire : **May, Hans Ulrich**
**Thierschstrasse 27**
**D-8000 München 22 (DE)**

Jouve, 18, rue St-Denis, 75001 Paris, France

Appareil électrique de cuisson

L'invention se rapporte aux appareils électriques de cuisson comportant, dans un boîtier, une résistance adaptée à chauffer une cuve amovible de réception d'aliments, et un dispositif de commande de ladite résistance comprenant, en particulier, un thermostat de limitation de la température qui est monté en série avec la résistance et qui est commandé par un palpeur de prélévement de la température de la cuve de réception d'aliments.

Un appareil de cuisson de ce genre est décrit, par exemple, dans le brevet US-A-2 749 426.

L'invention concerne, plus précisément, un appareil de cuisson de ce genre dans lequel le dispositif de commande de la résistance comprend en outre, d'une part, un interrupteur électronique d'alimentation qui peut prendre, soit un état de conduction pour lequel la résistance est soumise à la tension du secteur, soit un état de non-conduction pour lequel la résistance n'est plus sous tension, et d'autre part, un circuit électronique de régulation que l'usager peut régler en vue d'alimenter la résistance de façon intermittente par l'intermédiaire de l'interrupteur d'alimentation pour que cette résistance fournisse ainsi une puissance moyenne déterminée, ce circuit électronique fournissant à cet effet à l'interrupteur d'alimentation, à intervalle régulier, des signaux de commande qui maintiennent cet interrupteur en état de conduction pendant toute leur durée et dont ladite durée est fonction du réglage effectué par l'usager sur ledit circuit de régulation au moyen d'un bouton de réglage de puissance, la puissance moyenne fournie à la résistance étant proportionnelle au rapport entre ladite durée et ledit intervalle.

De tels dispositifs de commande, dans lesquels la puissance moyenne est ainsi proportionnelle au rapport entre durée et intervalle de signaux de commande, sont décrits, par exemple, dans les brevets allemands DE-A1-2 605 533 et DE-A1-2 717 888.

L'invention a pour objet d'assurer que, pour les puissances faibles, le thermostat de limitation de la température joue le rôle d'un thermostat de sécurité propre à arrêter le fonctionnement de l'appareil lorsque la température de la cuve s'élève de façon anormale, alors que, pour les puissances plus fortes, ce thermostat joue le rôle d'un organe régulateur propre à maintenir la cuve à une température élevée souhaitée, telle que celle nécessaire à une opération de friture par exemple.

Dans un appareil de cuisson selon l'invention, l'émission des signaux de commande est subordonnée à l'application de la tension du secteur sur une ligne d'activation du circuit de régulation, et le dispositif de commande de la résistance comprend un contacteur comportant une armature mobile qui peut occuper, soit une première position pour laquelle le thermostat commande ladite ligne, soit une seconde position pour laquelle ladite ligne est indépendante du thermostat, ladite armature mobile étant liée mécaniquement au bouton de réglage de puissance de telle sorte que cette armature soit en la première position pour les puissances faibles et en la seconde position pour les puissances fortes.

Grâce à cette disposition, si, pour un réglage à puissance forte, la température de la cuve dépasse pendant la cuisson la limite autorisée par le thermostat, ce thermostat, jouant son rôle d'organe régulateur, interrompt momentanément l'alimentation de la résistance : la cuve refroidit alors légèrement jusqu'à la valeur de seuil du thermostat pour laquelle celui-ci se referme et alimente à nouveau la résistance. Par contre, si, pour un réglage à puissance faible, la température de la cuve dépasse la limite autorisée par le thermostat, ceci par suite d'une condition anormale telle qu'un manque d'eau dans les aliments en cours de cuisson, le thermostat s'ouvre et, jouant son rôle d'organe de sécurité, coupe la ligne d'activation du circuit de régulation et arrête ainsi le fonctionnement de ce circuit et donc le fonctionnement de l'appareil.

Les caractéristiques et avantages de l'invention ressortiront d'ailleurs de la description qui va suivre, à titre d'exemple, en référence aux dessins annexés dans lesquels :

la figure 1 est une vue éclatée d'un appareil électrique de cuisson conforme à l'invention ;

la figure 2 représente, à plus grande échelle, une coupe verticale de cet appareil ;

la figure 3 est une vue de dessus du tableau de commande de cet appareil ;

la figure 4 représente une coupe verticale partielle selon la ligne IV-IV de la figure 3 ;

la figure 5 est un schéma électrique d'ensemble des éléments principaux du dispositif de commande de la résistance chauffante de l'appareil ;

la figure 6 est un diagramme illustrant le mode de chauffage de la résistance en fonction du temps lorsque la puissance moyenne fournie à la résistance pendant la phase de cuisson normale est égale aux trois quarts de la puissance nominale ;

la figure 7 est un diagramme analogue, dans le cas où la puissance moyenne est égale à la moitié de la puissance nominale, et dans le cas où la phase de cuisson normale est suivie d'un maintien au chaud.

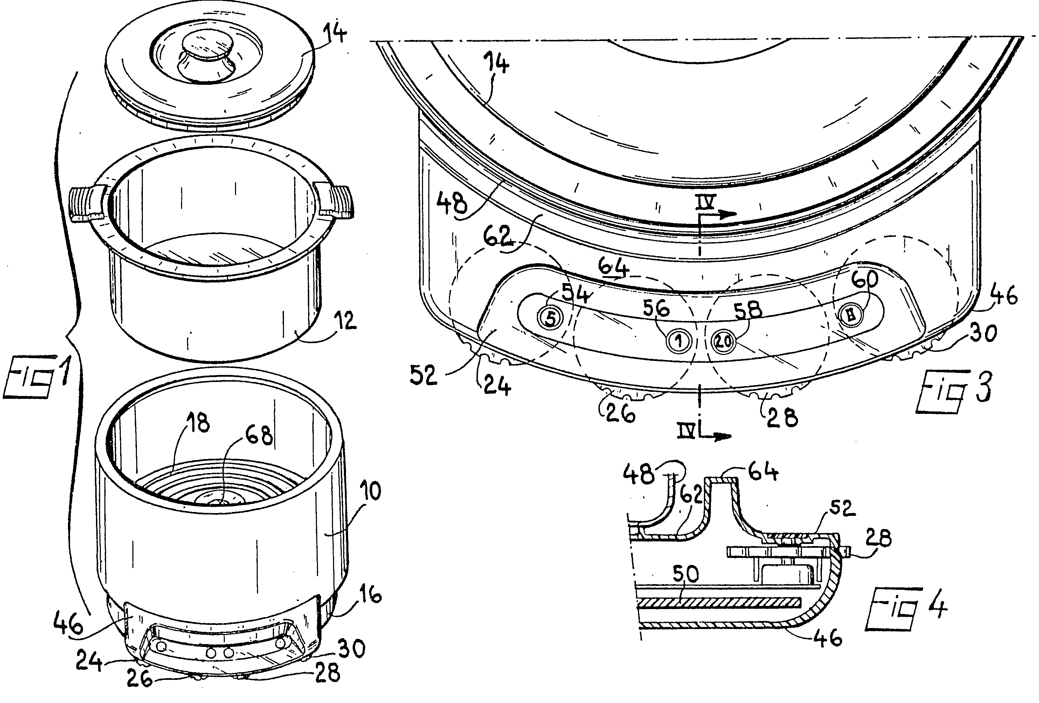

L'appareil de cuisson représenté comporte un boîtier 10 (fig. 1) présentant la forme générale d'un puits cylindrique qui reçoit une cuve amovible de réception d'aliments 12 fermée par un couvercle 14, et qui est supporté par une embase 16. Au voisinage du fond de ce puits est disposée dans un plan horizontal une résistance blindée spiralée 18 adaptée à chauffer la cuve 12.

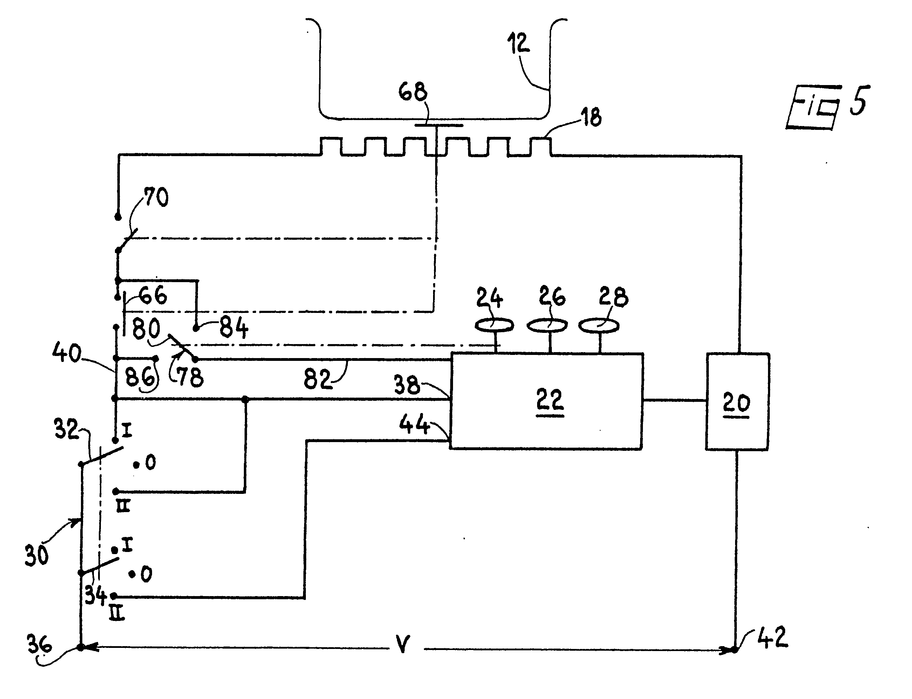

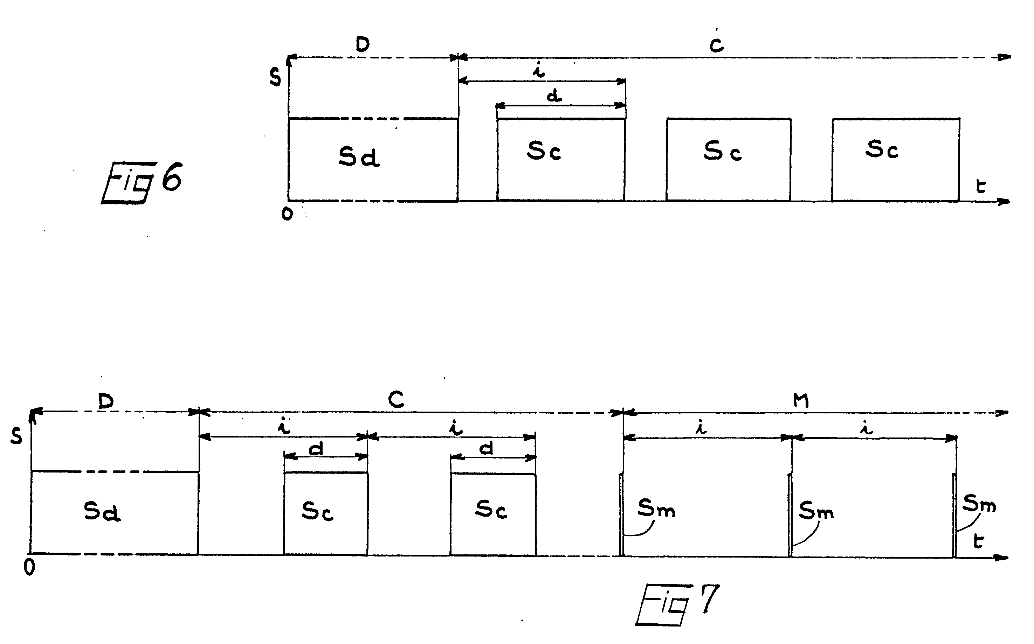

Dans l'embase 16 est agencé un dispositif de commande de la résistance 18. Ce dispositif comprend (fig. 5), d'une part, un interrupteur d'alimentation électronique 20 qui peut prendre, soit un état de conduction pour lequel la résistance 18 est soumise à la tension V du secteur, soit un état de non-conduction pour lequel cette résistance n'est plus sous tension, et, d'autre part, un circuit de régulation électronique 22 que l'usager peut régler en vue d'alimenter la résistance 18 de façon intermittente par l'intermédiaire de l'interrupteur d'alimentation 20 pour que cette résistance fournisse ainsi une puissance moyenne déterminée pendant un temps déterminé, dit phase de cuisson normale. A cet effet, comme illustré sur les figures 6 et 7, pendant la phase de cuisson normale C, le circuit de régulation 22 fournit à l'interrupteur 20, à intervalle régulier i, des signaux de commande Sc qui maintiennent cet interrupteur en état de conduction pendant toute leur durée d et dont ladite durée est fonction du réglage effectué par l'usager sur le circuit 22, la puissance moyenne fournie à la résistance 18 étant ainsi proportionnelle au rapport entre la durée d et l'intervalle i. C'est ainsi que, dans le cas de la figure 6, cette puissance moyenne est égale aux trois quarts de la puissance nominale de la résistance, par exemple à 1 200 watts si ladite puissance nominale est de 1 600 watts ; en revanche, dans le cas de la figure 7, la puissance moyenne est égale à la moitié de ladite puissance nominale, c'est-à-dire à 800 watts dans l'exemple considéré. On précise que l'intervalle i est compris, de préférence, entre dix et soixante secondes, par exemple égal à quarante secondes environ.

Comme schématisé à la figure 5, le circuit de régulation 22 comprend trois boutons de réglage, soit un premier bouton 24 destiné au réglage de la durée d des signaux de commande Sc, c'est-à-dire de la puissance moyenne pendant la phase C, ainsi qu'un second et un troisième boutons 26 et 28 destinés au réglage du temps de la phase C et réservés respectivement aux réglages des heures et des minutes.

Préalablement à la phase de cuisson normale C, le circuit de régulation 22 maintient automatiquement l'interrupteur d'alimentation 20 en état de conduction permanent (signal Sd) pendant un temps D, dit phase de début de cuisson, invariable quel que soit le réglage du circuit 22, et compris entre une et cinq minutes, et de préférence sensiblement égal à trois minutes.

Le dispositif de commande de la résistance 18 comprend en outre un commutateur 30 comportant deux armatures mobiles 32 et 34 liées mécaniquement l'une à l'autre (fig. 5) qui sont branchées à une borne 36 du secteur et qui peuvent venir chacune au contact de trois plots référencés I, O et II. Les plots I et II associés à l'armature 32 sont reliés à une première entrée 38 du circuit de régulation 22 ainsi qu'à une ligne 40 d'alimentation de la résistance 18, laquelle résistance est, d'autre part, reliée à l'autre borne 42 du secteur par l'intermédiaire de l'interrupteur 20. Le plot II associé à l'armature 34 est relié à une seconde entrée 44 du circuit 22. Les plots O associés aux armatures 32 et 34, ainsi que le plot I associé à l'armature 34 sont, quant à eux, électriquement isolés.

Lorsque les armatures 32 et 34 du commutateur 30 occupent une première position, dite position de cuisson simple, c'est-à-dire sont respectivement au contact des deux plots I, le circuit 22, qui est alors activé par son entrée 38, assure normalement l'alimentation de la résistance 18 pendant toute la cuisson (phases D et C) et l'interrompt complètement à la fin de cette cuisson, c'est-à-dire à l'instant qui a été choisi par l'usager par réglage des boutons 26 et 28.

En revanche, lorsque les armatures 32 et 34 occupent une seconde position, dite position de cuisson avec maintien au chaud, c'est-à-dire sont respectivement au contact des deux plots II, le circuit 22, qui est alors activé en outre par son entrée 44, non seulement assure la cuisson (phases D et C), mais fournit ensuite à l'interrupteur 20, à intervalle régulier i, de brefs signaux de commande Sm (fig. 7) dont la durée (par exemple inférieure à une seconde) est invariable quel que soit le réglage du circuit 22. Cette phase M de maintien au chaud après cuisson se poursuit jusqu'à ce que les armatures 32 et 34 du commutateur 30 soient amenées respectivement au contact des deux plots O, c'est-à-dire en la position d'arrêt total de l'appareil.

Comme on le voit bien sur les figures 3 et 4, les boutons 24, 26 et 28 de réglage et le bouton de manœuvre du commutateur 30 sont constitués respectivement par quatre disques (portant sur la figure 4 ces mêmes références), montés mobiles autour d'axes verticaux dans un prolongement 46 de l'embase 16, qui constitue un tableau de commande. Ce prolongement fait saillie latéralement par rapport à la paroi externe 48 du puits 10 de réception de la cuve, et contient également une platine 50 supportant le circuit 22 et l'interrupteur 20. Le tableau de commande 46 présente sur son bord externe quatre fentes, au travers desquelles font saillie respectivement quatre segments des disques 24 à 30, qui constituent les touches de manœuvre de ces disques. Le tableau de commande comporte également, sur sa face supérieure 52, quatre petits hublots transparents, respectivement 54, 56, 58 et 60, qui rendent visibles des indications portées par les disques et constituées, pour le disque 24, par des chiffres de 1 à 10 formant des repères de puissance, pour le disque 26, par des chiffres de 1 à 5 indiquant les heures, pour le disque 28, par des chiffres de dizaines indiquant des minutes, et, pour le disque 30, par les trois signes I, O et II. La face supérieure 52 du tableau de commande présente aussi une rigole 62 bordant la paroi externe 48 du puits, et destinée à collecter le liquide provenant d'un débordement éventuel de la cuve 12 et l'empêcher ainsi d'atteindre les fentes de passage des boutons 24 à 30. Cette rigole est séparée de ces boutons par un bossage 64 formant barrage de protection.

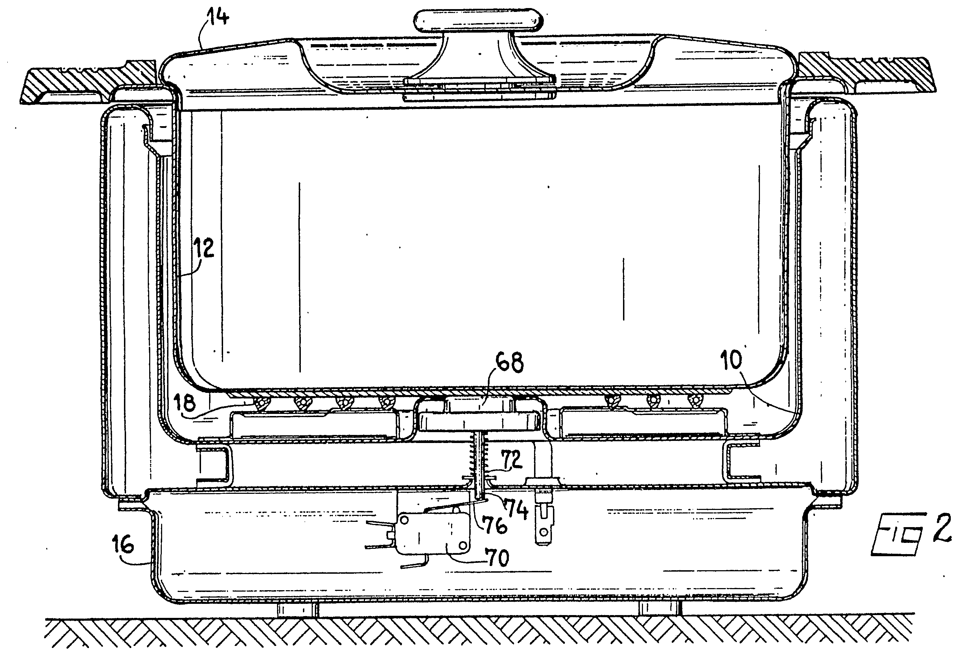

Le dispositif de commande de la résistance 18 (fig. 5) comprend en outre, d'une part, un thermostat 66 de limitation de la température (par exemple à 175 °C) qui est monté en série avec la résistance 18 et qui est commandé par un palpeur 68 de prélèvement de température appliqué élastiquement sur le fond de la cuve 12, et, d'autre part, un interrupteur de sécurité 70 qui est monté en série entre ce thermostat et la résistance et dont la fermeture est subordonnée à la mise en place de la cuve 12 dans le puits 10. Comme on le voit sur la figure 2, le palpeur 68 est situé dans la région centrale de la résistance 18, il est monté mobile verticalement à l'encontre d'un ressort 72, et il commande en même temps, grâce à une tige 74 qui en est solidaire, la touche 76 de manœuvre de l'interrupteur de sécurité 70.

Le dispositif de commande de la résistance 18 comprend, de plus, un contacteur 78 (fig. 5) comportant, d'une part, une armature mobile 80 reliée à une ligne 82 d'activation du circuit de régulation 22, et, d'autre part, deux plots 84 et 86 reliés respectivement aux bornes du thermostat 66. Comme l'émission des signaux de commande Sc est subordonnée à l'application de la tension V du secteur sur la ligne 82, il s'ensuit que, pour la première position de l'armature mobile (plot 84), les signaux Sc ne sont émis que pour l'état de fermeture du thermostat 66, alors que, pour la seconde position (plot 86) ces signaux sont émis indépendamment de l'état de ce thermostat. L'armature mobile 80 est liée mécaniquement au bouton de réglage de puissance 24 de telle sorte que cette armature soit en la première position (plot 84) pour les puissances faibles (par exemple repères 1 à 3 du bouton 24) et en la seconde position (plot 86) pour les puissances plus fortes (par exemple repères 4 à 10).

Grâce à cette disposition, pour les puissances faibles, le thermostat 66 joue le rôle d'un organe de sécurité propre à arrêter le fonctionnement de l'appareil lorsque la température de la cuve s'élève de façon anormale, alors que, pour les puissances plus fortes, le thermostat 66 joue le rôle d'un organe de régulation propre à maintenir la cuve à la température élevée souhaitée (175 °C environ).

Pour mettre en marche l'appareil, après avoir posé dans le puits 10 la cuve 12 contenant les aliments à cuire, l'usager place, d'une part, le bouton 24 de réglage de puissance en la position adaptée auxdits aliments (par exemple position 5, correspondant à une puissance moyenne de 800 watts, comme représenté sur la figure 3), et, d'autre part, les boutons 26 et 28 en les positions correspondant au temps souhaité de cuisson normale (par exemple 1 heure et 20 minutes). Puis l'usager place le bouton 30, soit à la position I de cuisson simple, soit à la position II de cuisson avec maintien au chaud (comme dans l'exemple de la figure 3).

Dès cet instant, puisque le thermostat 66 et l'interrupteur 70 sont fermés, démarre automatiquement la phase de début de cuisson D pendant laquelle la résistance 18 fournit de façon continue sa pleine puissance nominale. Pendant cette phase D, la cuve 12 atteint rapidement une température élevée permettant, par exemple, à l'usager de faire revenir convenablement dans une matière grasse des morceaux de viande préalablement à leur cuisson prolongée.

Après la phase D, se déroule la phase C de cuisson normale, puis éventuellement la phase M de maintien au chaud à puissance réduite (diagramme de la figure 7).

Si, par exemple pour le réglage à pleine puissance (position 10 du bouton 24 et donc position seconde de l'armature 80), la température de la cuve pendant la phase C dépasse la limite autorisée par le thermostat 66, ce thermostat s'ouvre et, jouant son rôle d'organe de régulation, interrompt l'alimentation de la résistance 18 : la cuve refroidit alors légèrement jusqu'à la valeur de seuil du thermostat pour laquelle celui-ci se referme et alimente à nouveau la résistance.

Si, pour un réglage à faible puissance (positions 1 à 3 du bouton 24 et donc position première de l'armature 80), la température de la cuve pendant la phase C dépasse la limite autorisée par le thermostat 66, ceci par suite d'une condition anormale telle qu'un manque d'eau dans les aliments en cours de cuisson, ce thermostat 66 s'ouvre et, jouant son rôle d'organe de sécurité, arrête le fonctionnement du circuit 22 et donc le fonctionnement de l'appareil.

Si, pour une raison ou l'autre, l'usager vient à enlever la cuve 12 du puits 10, le palpeur 68 remonte sous l'effet du ressort 72, ce qui provoque l'ouverture de l'interrupteur 70, et l'arrêt du chauffage.

Ainsi, l'appareil selon l'invention permet de réaliser en toute sécurité des types de cuisson très divers allant du mijotage à température douce pendant un temps prolongé, jusqu'à la grande friture à haute température.

**Revendications**

1. Appareil électrique de cuisson comportant, dans un boîtier (10), une résistance (18) adaptée à chauffer une cuve amovible (12) de réception d'aliments, et un dispositif de commande de ladite résistance comprenant un thermostat (66) de limitation de la température monté en série avec la résistance (18) et commandé par un palpeur (68) de prélèvement de la température de la cuve (12), un interrupteur d'alimentation (20) qui peut prendre, soit un état de conduction pour lequel la résistance (18) est soumise à la tension (V) du secteur, soit un état de non-conduction pour lequel la résistance (18) n'est plus sous tension, et un circuit de régulation (22) que l'usager peut régler en vue d'alimenter la résistance (18) de façon intermittente par l'intermédiaire de l'interrupteur d'alimentation (20), caractérisé en ce que, l'interrupteur d'alimentation (20) étant un interrupteur électronique, le circuit de régulation (22) est un circuit électronique qui fournit à cet interrupteur (20) à intervalle régulier (i) des signaux de commande (Sc) qui maintiennent cet interrupteur (20) en état de conduction pendant toute leur durée (d) et dont ladite durée est fonction du réglage effectué par l'usager sur ledit circuit (22), la puissance moyenne fournie à la résistance (18) étant ainsi proportionnelle au rapport entre ladite durée (d) et ledit intervalle (i), le circuit de régulation (22) comprenant à cet effet un bouton (24) destiné au réglage de la durée (d) des signaux (Sc) et donc de la puissance moyenne, et en ce que, l'émission des signaux (Sc) étant subordonnée à l'application de la tension (V) du secteur sur une ligne (82) d'activation du circuit (22), le dispositif de commande de la résistance (18) comprend en outre un contacteur (78) comportant une armature mobile (80) qui peut occuper, soit une première position (84) pour laquelle le thermostat (66) commande ladite ligne (82), soit une seconde position (86) pour laquelle ladite ligne (82) est indépendante du thermostat (66), ladite armature mobile (80) étant liée mécaniquement au bouton (24) de réglage de puissance de telle sorte que cette armature (80) soit en la première position (84) pour les puissances faibles et en la seconde position (86) pour les puissances fortes.

2. Appareil de cuisson selon la revendication 1, caractérisé en ce que, le palpeur (68) du thermostat (66) étant monté mobile à l'encontre d'un ressort (72), ce palpeur commande la touche de manœuvre (76) d'un interrupteur de sécurité (70) qui est monté en série avec la résistance (18) et dont la fermeture est subordonnée à la mise en place de la cuve (12) dans le boîtier (10).

3. Appareil de cuisson selon la revendication 1 ou la revendication 2, caractérisé en ce que le dispositif de commande de la résistance (18) comprend en outre un commutateur (30) qui peut occuper, en particulier, soit une position (I) de cuisson simple, pour laquelle le circuit de régulation (22) assure l'alimentation de la résistance (18) pendant toute la cuisson et l'interrompt complètement à la fin de cette cuisson, soit une position (II) de cuisson avec maintien au chaud, pour laquelle le circuit de régulation (22), après la cuisson, fournit à l'interrupteur d'alimentation (20) à intervalle régulier (i) de brefs signaux de commande (Sm) dont la durée est invariable quel que soit le réglage dudit circuit de régulation (22).

4. Appareil de cuisson selon la revendication 3, caractérisé en ce que, le boîtier (10) présentant la forme d'un puits cylindrique recevant la cuve (12) et supporté par une embase (16), et la résistance chauffante (18) étant disposée dans un plan horizontal au voisinage du fond de ce puits, les boutons de réglage (24, 26, 28) et le bouton de manœuvre du commutateur (30) sont agencés dans un prolongement (46) de l'embase qui fait saillie latéralement par rapport à la paroi externe (48) dudit puits et qui contient également une platine (50) supportant le circuit de régulation (22) et l'interrupteur d'alimentation (20), ledit prolongement (46) présentant sur sa face supérieure (52) une rigole (62) bordant la paroi externe (48) du puits et séparée desdits boutons par un bossage de protection (64).

**Claims**

1. Electrical cooking appliance with comprises within a casing (10): a resistor (18) adapted for heating a removable pot (12) for receiving food, and means for controlling the resistor, said means including a thermo regulator (66) for limiting the temperature and being connected in series to said resistor (18) and controlled by a temperature sensor (68) sensing the temperature of said pot (12), and comprising a main switch (20) adapted to be either in a conductive state in which the resistor (18) is connected to the line voltage (V) or in a non-conductive state in which no voltage is applied to the resistor (18), and comprising a control circuit (22) adapted to be set by the user so as to intermittently supply power to the resistor (18) by means of the switch (20), characterized in that the main switch (20) is an electronic switch, and the control circuit (22) is an electronic switching circuit supplying control signals (Sc) at regular intervals (i) to said switch (20) which signals keep said switch (20) in the conductive state during their entire period (d), their period being a function of the setting made by the user at said circuit (22), wherein the mean power supplied to the resistor (18) is thus proportional to the ratio of the period (d) and the interval (i), the control circuit (22) for this purpose including a button (24) for controlling the period (d) of the signals (Sc) and thus the mean power, and further characterized in that the delivery of the signals (Sc) is subordinated to the application of the line voltage (V) through a line (82) for activating the circuit (22), the means for controlling the resistor (18) moreover including a contactor (78) having a movable contact arm (80) having either a first position (84) in which the thermo regulator (66) controls the line (82) or a second position (86) in which the line (82) is independent of the thermo regulator (66), wherein the movable contact arm (80) is mechanically coupled to the power controlling button (24) such that said contact arm (80) is in its first position (84) for the low power and in its second position (86) for the high power.

2. Cooking appliance as claimed in claim 1, characterized in that the sensor (68) of the thermo regulator (66) is movably held against the action of a spring (72) and controls the actuating key (76) of a safety switch (70) which is connected in series to the resistor (18) and the closing operation of which is subordinated to the insertion of the pot (12) into the casing (10).

3. Cooking appliance as claimed in claim 1 or claim 2, characterized in that the means for controlling the resistor (18) furthermore include a change-over switch (20) which has in particular either a position (I) for simple cooking, in which the control circuit (22) provides for the power supply to the resistor (18) during the entire cooking operation and at the termination there of shuts the resistor off completely, or a position (II) for cooking and keeping hot, in which the control circuit (22) after the cooking operation supplies to the switch (20) short control signals (Sm) at regular intervals (i), the period of said control signals being invariable irrespective of the setting of the control circuit (22).

4. Cooking appliance as claimed in claim 3, characterized in that the casing (10) is shaped as a cylindrical container receiving the pot (12) and being supported on a base (16), and the heating resistor (18) is disposed in a horizontal plane adjacent the bottom of said container, that the setting buttons (24, 26, 28) and the change-over button (30) are mounted in an extension (46) of the base, said extension projecting laterally from the outer wall (48) of the container and also including a printed circuit board (50) supporting the control circuit (22) and the main switch (20), wherein the top (52) of said extension (46) is formed with a groove (62) contiguous with the outer container wall (48) and separated from the buttons by a protective skirt (64).

**Ansprüche**

1. Elektrisches Kochgerät, welches in einem Gehäuse (10) aufweist : einen Widerstand (18), der eingerichtet ist zum Erhitzen eines zur Aufnahme von Nahrungsmitteln bestimmten herausnehmbaren Topfes (12), und eine Vorrichtung zur Steuerung des Widerstandes, die einen Thermostaten (66) zur Temperaturbegrenzung aufweist, der in Reihe mit dem Widerstand (18) geschaltet und durch einen die Temperatur des Topfes (12) fühlenden Temperaturfühler (68) gesteuert ist, einen Hauptschalter (20), der entweder einen Leitungszustand, in welchem der Widerstand (18) an der Netzspannung (V) liegt, oder einen Nichtleitungszustand, in dem der Widerstand (18) nicht unter Spannung steht, einnehmen kann, und einen Regelkreis (22), den der Benutzer einstellen kann, um den Widerstand (18) intermittierend mittels des Schalters (20) zu speisen, dadurch gekennzeichnet, daß der Hauptschalter (20) ein elektronischer Schalter ist, der Regelkreis (22) ein elektronischer Schaltkreis ist, der diesem Schalter (20) in einem regelmäßigen Intervall (i) Steuersignale (Sc) liefert, welche diesen Schalter (20) während ihrer ganzen Dauer (d) im Leitungszustand halten und deren Dauer eine Funktion der vom Benutzer an diesem Kreis (22) vorgenommenen Einstellung ist, wobei die dem Widerstand (18) zugeführte mittlere Leistung so proportional dem Verhältnis zwischen der Dauer (d) und dem Intervall (i) ist, wobei der Regelkreis (22) zu diesem Zweck einen Knopf (24) zum Regeln der Dauer (d) der Signale (Sc) und damit der mittleren Leistung aufweist, und weiter dadurch gekennzeichnet, daß die Aussendung der Signale (Sc) dem Anlegen der Netzspannung (V) über eine Leitung (82) zur Aktivierung des Kreises (22) untergeordnet ist, die Vorrichtung zur Steuerung des Widerstandes (18) außerdem einen Schalter (78) aufweist, der einen beweglichen Schaltarm (80) aufweist, der entweder eine erste Stellung (84), in welcher der Thermostat (66) die Leitung (82) steuert, oder eine zweite Stellung (86), in der die Leitung (82) unabhängig vom Thermostaten (66) ist, einnehmen kann, wobei der bewegliche Schaltarm (80) mechanisch mit dem der Regelung der Leistung dienenden Knopf (24) so verbunden ist, daß dieser Schaltarm (80) für die geringen Leistungen in der ersten Stellung (84) und für die hohen Leistungen in der zweiten Stellung (86) ist.

2. Kochgerät nach Anspruch 1, dadurch gekennzeichnet, daß der Fühler (68) des Thermostats (66) gegen die Wirkung einer Feder (72) beweglich gehalten ist und die Betätigungstaste (76) eines Sicherheitsschalters (70) steuert, der in Reihe mit dem Widerstand (18) geschaltet ist und dessen Schließung dem Einsetzen des Topfes (12) in das Gehäuse (10) untergeordnet ist.

3. Kochgerät nach Anspruch 1 oder Anspruch 2, dadurch gekennzeichnet, daß die Vorrichtung zur Steuerung des Widerstands (18) außerdem einen Umschalter (30) aufweist, der insbesondere entweder eine Stellung (I) für einfaches Kochen, in welcher der Regelkreis (22) die Speisung des Widerstands (18) während des ganzen Kochvorgangs besorgt und ihn am Ende dieses Kochvorgangs völlig abschaltet, oder eine Stellung (II) für Kochen mit Warmhalten, in welcher der Regelkreis (22) nach dem Kochen dem Schalter (20) in regelmäßigem Intervall (i) kurze Steuersignale (Sm) liefert, deren Dauer unabhängig von der Einstellung des Regelkreises (22) unveränderlich ist, einnehmen kann.

4. Kochgerät nach Anspruch 3, dadurch gekennzeichnet, daß das Gehäuse (10) die Form eines den Topf (12) aufnehmenden und von einem Sockel (16) getragenen zylindrischen Troges hat und der Heizwiderstand (18) in einer waagerechten Ebene in der Nähe des Bodens dieses Troges angeordnet ist, die Einstellknöpfe (24, 26, 28) und der Umschalterbetätigungsknopf (30) in einem Fortsatz (46) des Sockels angeordnet sind, der seitlich bezüglich der Außenwand (48) des Troges vorspringt und auch eine Platine (50) enthält, die den Regelkreis (22) und den Hauptschalter (20) trägt, wobei der Fortsatz (46) an seiner Oberseite (52) eine Rinne (62) aufweist, die an die Außenwand (48) des Troges anschließt und von den Knöpfen durch einen Schutzwall (64) getrennt ist.

Fig 3

Fig 4

Fig 1

FIG 2

Fig 5

0 029 991

Fig 6

Fig 7

0 029 991